Europäisches Patentamt

European Patent Office

Office européen des brevets

(11) Veröffentlichungsnummer: **0 424 974 A1**

## EUROPÄISCHE PATENTANMELDUNG

(21) Anmeldenummer: 90120674.8

(22) Anmeldetag: 26.10.90

(51) Int. Cl.5: **B64D 17/02**, B63B 41/00

(30) Priorität: 27.10.89 DE 3935886
11.01.90 DE 4000596

(43) Veröffentlichungstag der Anmeldung:
02.05.91 Patentblatt 91/18

(84) Benannte Vertragsstaaten:
**BE CH DE DK ES FR GB IT LI NL**

(71) Anmelder: **MYUNG-SOON RIELEIT**
**Münsterstrasse 71**
**W-4000 Düsseldorf(DE)**

(72) Erfinder: **Rieleit, Peter**
**Bankstrasse 49**
**W-4000 Düsseldorf 30(DE)**

(74) Vertreter: **Döring, Wolfgang, Dr. Ing.**
**Mörikestrasse 18**
**W-4000 Düsseldorf 30(DE)**

(54) **Fahrzeug, insbesondere Luft oder Wasserfahrzeug.**

(57) Es wird ein Fahrzeug, insbesondere Luft- oder Wasserfahrzeug, mit mindestens einer Tragfläche beschrieben, wobei diese Tragfläche eine obere und/oder eine untere Tragflächenabdeckung sowie einen an der Tragfläche vorgesehenen Bereich umfaßt, der zwischen einer ersten Stellung, in der der Luft- bzw. Wasserwiderstand der Tragfläche gering ist, und einer zweiten Stellung, in der der Luft- bzw. Wasserwiderstand vergrößert ist, bewegbar ist. Fer- ner ist eine an dem Bereich angreifende Betäti- gungseinrichtung zur Durchführung der Bewegung vorgesehen. Der Bereich ist als verformbarer Bereich ausgebildet und bildet einen Abschnitt der oberen und/oder unteren Tragflächenabdeckung.

EP 0 424 974 A1

## FAHRZEUG, INSBESONDERE LUFT- ODER WASSERFAHRZEUG

Die vorliegende Erfindung betrifft ein Fahrzeug, insbesondere ein Luft-oder Wasserfahrzeug, mit den Merkmalen des Oberbegriffs des Patentanspruchs 1.

Luftfahrzeuge, wie beispielsweise Flugzeuge, Ultraleichtflugzeuge, Drachen, Gleitschirme, Fallschirme o. dgl. besitzen mindenstens eine Tragfläche, um den erforderlichen Auftrieb zu erzeugen bzw. bei Fallschirmen den freien Fall im notwendigen Maße zu bremsen. Darüber hinaus ist es auch bei Wasserfahrzeugen wie beispielsweise Tragflächenbooten, bekannt, hier Tragflächen am Rumpf vorzusehen, um so den Rumpf des Wasserfahrzeuges zumindestens teilweise aus dem Wasser zu heben und damit den Reibungswiderstand zu verringern.

Um bei derartigen Fahrzeugen, die mit mindestens einer Tragfläche versehen sind, ein Steuern der Fahrzeuge in eine bestimmte Richtung zu ermöglichen, weisen die Tragflächen der Fahrzeuge Bereiche auf, die zwischen einer ersten Stellung, in der der Luft- bzw. Wasserwiderstand der Tragfläche gering ist, und einer zweiten Stellung, in der der Luft- bzw. Wasserwiderstand vergrößert ist, bewegbar sind. So werden diese Bereiche, beispielsweise bei Flugzeugen, durch Klappen gebildet, die in Flugrichtung gesehen am hinteren Rand der Tragfläche angeordnet sind und zur Erhöhung des Luftwiderstandes aus der Ebene der Tragfläche verschwenkt werden können. Durch eine derartige Erhöhung des Widerstandes wird das Flugzeug dann einseitig gebremst, so daß es eine entsprechende Drehung ausführt, wodurch letzten Endes das Flugzeug steuerbar wird. Auf dem selben Prinzip beruht auch die Steuerung von mit Tragflächen versehenen Wasserfahrzeugen, wie beispielsweise die bereits zuvor genannten Tragflügelboote oder Unterseeboote.

Darüber hinaus ist es bei bestimmten Drachentypen, den sogenannten Parafoil-Drachen, oder Gleitschirmen bekannt, zur Erhöhung des Luftwiderstandes und damit zur Steuerung der Flugrichtung die Gesamtform der Tragflächen zu verändern. Hierbei wird beispielsweise bei Gleitschirmen einseitig nach dem zuvor beschriebenen Prinzip der Klappen das hintere Ende des aus der Tragfläche bestehenden Gleitfallschirmes abgeknickt, so daß eine derartig zur Hälfte verformte Tragfläche einen entsprechend höheren Luftwiderstand besitzt.

Die DE-GM 88 11 274.8 beschreibt eine Richtungssteuerung für Parafoil-Drachen. Hierbei besteht der Drachen aus einer Tragfläche, wobei auf jeder Seite der Tragfläche eine Schar von Waageseilen vorgesehen ist, so daß bei einer Zugbeanspruchung eines dieser Schar von Waageseilen die Lage dieser auf Zug beanspruchten Tragflächenseite verändert wird, wodurch der Luftwiderstand entsprechend erhöht und damit die Richtungsänderung herbeigeführt werden.

Der vorliegenden Erfindung liegt die Aufgabe zugrunde, ein Fahrzeug der angegebenen Art zur Verfügung zu stellen, das besonders einfach steuer bar ist.

Diese Aufgabe wird erfindungsgemäß durch ein Fahrzeug mit den kennzeichnenden Merkmalen des Patentanspruchs 1 gelöst.

Das erfindungsgemäße Fahrzeug, bei dem es sich um ein Luft- oder Wasserfahrzeug der zuvor genannten Art handelt, besitzt mindestens eine Tragfläche, die eine obere und/oder eine untere Tragflächenabdeckung sowie einen an der Tragfläche vorgesehenen Bereich umfaßt, der zwischen einer ersten Stellung, in der der Luft- bzw. Wasserwiderstand der Tragfläche gering ist, und einer zweiten Stellung in der der Luft- bzw. Wasserwiderstand der Tragfläche vergrößert ist, bewegbar ist. Hierbei ist eine Betätigungseinrichtung vorgesehen, die an dem Bereich angreift und die die zuvor beschriebene Bewegung des Bereiches bewirkt. Der Bereich ist als verformbarer Bereich ausgebildet und bildet einen Abschnitt der oberen und/oder unteren Tragflächenabdeckung aus, d. h. der Bereich ist derartig gestaltet, daß er in seiner ersten Stellung in der Ebene der Tragflächenabdeckung angeordnet ist, so daß hierdurch der Luft- oder Wasserwiderstand der Tragfläche entsprechend gering ist und nicht verändert wird. Hingegen in der zweiten Stellung ragt dieser Bereich linienförmig oder bevorzugt flächig aus der Ebene der Tragflächenabdeckung heraus, so daß der Luft- bzw. Wasserwiderstand der Tragfläche, beispielsweise durch Abriß des Strömungsprofils oder Auftreten von Verwirbelungen, vergrößert wird, wodurch die gewünschte Richtungsänderung des Fahrzeuges herbeigeführt wird.

Das erfindungsgemäße Fahrzeug weist eine Reihe von Vorteilen auf. So ist beispielsweise ein mit einer derartigen Tragfläche versehenes Luftbzw. Wasserfahrzeug unter Anwendung von wenigen Bauteilen besonders gut steuerbar, da es hierfür im einfachsten Fall lediglich erforderlich ist, den entsprechenden Bereich elastisch verformbar zu gestalten, so daß dieser Bereich in seiner ersten Stellung in der Ebene der Tragflächenabdeckung angeordnet ist und beispielsweise hydraulisch und/oder mechanisch in die zweite Stellung durch eine einfache Verformung des entsprechenden Bereiches überführt werden kann. Auch läßt sich hierbei der Grad der Verformung besonders gut einstellen, so daß das Fahrzeug besonders präzise gesteuert werden kann. Dies trifft insbesondere dann zu, wenn die Tragfläche eine Vielzahl von entsprechend verformbaren Bereichen aufweist, die jeweils gemeinsam oder vorzugsweise getrennt zwischen der ersten und der zweiten Stellung bewegt werden können. Vondaher bietet sich eine derartige Tragfläche insbesondere für solche Luftfahrzeuge an, die eine Leichtbauweise besitzen, was beispielsweise auf die Ultraleichtflugzeuge, Gleitfallschirme, Lenkdrachen sowie die zuvor beschriebenen Parafoil-Drachen zutrifft.

Eine besonders geeignete Ausführungsform des erfindungsgemäßen Fahrzeuges sieht vor, daß die Tragfläche eine Vielzahl von verformbaren Bereichen aufweist, die bevorzugt einzeln von der ersten Stellung in die zweite Stellung bewegt werden können. Hierdurch wird in besonders einfacher Weise erreicht, daß das Fahrzeug sehr präzise bei einem Richtungswechsel gesteuert werden kann, da durch eine unterschiedliche Anzahl oder einen unterschiedlichen Verformungsgrad der verformbaren Bereiche der Luft- bzw. Wasserwiderstand besonders fein und dosiert vergrößert bzw. verkleinert werden kann.

Bei einer weiteren Ausgestaltung des erfindungsgemäßen Fahrzeuges ist nur die obere Tragflächenabdeckung mit dem verformbaren Bereich bzw. der zuvor beschriebenen Vielzahl der verformbaren Bereiche ausgestattet. Eine derartige Ausführungsform bietet sich insbesondere in den Fällen an, bei denen die Betätigungseinrichtung innerhalb der Tragflächen ange ordnet ist und die Betätigungseinrichtung derart ausgebildet ist, daß sie durch eine mechanische Zugbeanspruchung den verformbaren Bereich kegelstumpfartig in die Tragfläche hineinzieht, so daß auf der oberen Tragflächenabdeckung entsprechend Aussparungen entstehen. Durch diese Aussparungen wird der Strömungswiderstand der Tragfläche beispielsweise durch Bildung von entsprechenden Verwirbelungszonen, vergrößert, so daß entsprechende Kräfte auf die Tragfläche und damit auf das Fahrzeug einwirken, die zu einer Drehung des Fahrzeuges führen.

Grundsätzlich kann der verformbare Bereich an jeder Stelle der Tragflächenabdeckung vorgesehen sein. Besonders große Änderungen des Luft-bzw. Wasserwiderstandes werden dadurch erreicht, daß der verformbare Bereich bzw. die Vielzahl der verformbaren Bereiche in einen vorderen Abschnitt der Tragflächenabdeckung angeordnet ist, da hierdurch das Strömungsprofil unmittelbar geändert wird, wodurch ein entsprechender Abtrieb und eine entsprechende Vergrößerung des Luft- bzw. Wasserwiderstandes erreicht werden.

Abhängig von der gewünschten Vergrößerung des Luft- bzw. Wasserwiderstandes und damit auch abhängig von dem zu erreichenden Richtungswechsel richtet sich die Größe des verformbaren Bereiches bzw. der Vielzahl der verformbaren Bereiche. Hierbei nimmt der verformbare Bereich bzw. die Vielzahl der verformbaren Bereiche eine Fläche ein, die etwa 10 % bis etwa 80 %, vorzugsweise etwa 20 % bis etwa 40 %, der Fläche der Tragflächenabdeckung beträgt.

Eine besonders schnelle und fein dosierte Richtungsänderung erzielt man bei solchen Luftfahrzeugen, bei denen die Tragfläche eine insgesamt flexible Konstruktion, insbesondere eine stablose Konstruktion aufweist, wobei hier die Tragfläche in Flugrichtung gesehen im vorderen Bereich, insbesondere in der Nähe der oder an der vorderen Kante, einseitig offene Luftkammern umfaßt bzw. ausschließlich aus diesen einseitig offenen Luftkammern gebildet ist. Hierbei läßt sich die Tragflächenabdeckung, die beispielsweise aus den an sich bekannten Spinnakergeweben besteht, besonders leicht, beispielsweise schon durch geringe Zugbeanspruchungen, hervorgerufen durch entsprechende Leinen, in den Zonen der verformbaren Bereiche zwischen der ersten Stellung und der zweiten Stellung derselben bewegen.

Um bei der zuvor beschriebenen Ausführungsform des mit einer derartigen Tragfläche versehenen Luftfahrzeuges, bei dem es sich insbesondere um Gleitfallschirme oder Parafoil-Drachen handelt, die Flugeigenschaften zu optimieren, sieht eine andere Ausführungsform vor, daß die einseitig offenen Luftkammern im Bereich ihrer Öffnung noch zusätzliche Wandungen aufweisen, die sich jedoch nicht über die gesamte Länge der Luftkammern erstrecken. Hierdurch wird die Öffnung einer jeden Luftkammer weiter kammerartig aufgeteilt, wobei die hierdurch entstehenden Kammern an ihrem rückseitigen Ende ebenfalls offen sind und in die eigentliche Luftkammer einmünden, wie dies noch nachfolgend anhand der konkreten Ausführungsbeispiele beschrieben ist.

Die zusätzlichen Wandungen erstrecken sich über etwa 10 % bis etwa 40 %, vorzugsweise über etwa 20 % bis etwa 30 %, der Tiefe der Luftkammern und sind, wie bereits vorstehend beschrieben, auch an ihrem hinteren Ende offen.

Um eine hohe Belastung und damit verbunden ggf. ein Ausreißen dieser zusätzlichen Wandung, die die obere und untere Tragflächenabdeckung miteinander verbindet zu verhindern, ist die Abschlußkante der zusätzlichen Wandung bogenförmig, vorzugsweise in Flugrichtung gesehen konkav, gekrümmt.

Die Betätigungseinrichtung für den verformbaren Bereich kann bei dem erfindungsgemäßen Fahrzeug grundsätzlich überall an der Tragfläche angeordnet sein. Eine bevorzugte Ausführungsform sieht vor, daß die Betätigungseinrichtung innerhalb der Tragfläche vorgesehen ist, so daß durch die Betätigungseinrichtung selbst die Strömungsverhältnisse an der Tragfläche nicht verändert werden und somit hierdurch auch kein zusätzlicher Widerstand vorhanden ist.

Wie bereits vorstehend dargelegt, kann die Betätigungseinrichtung für den verformbaren Bereich beispielsweise als mechanische, hydraulische oder pneumatische Betätigungseinrichtung ausgebildet sein. Für Gleitschirme, Ultraleichtflugzeuge oder Parafoil-Drachen bietet es sich an, die Betätigungseinrichtung derart auszugestalten, daß durch eine Zugbeanspruchung der verformbare Bereich in die zweite Stellung bewegt wird. Im einfachsten Fall kann man dies dadurch erreichen, daß an dem verformbaren Bereich die an sich bekannten Waageseile punktuell befestigt sind, so daß bei einer Zugbeanspruchung der verformbare Bereich in die zweite Stellung bewegt wird. Ferner ist es möglich, auch anstelle der Waageseile Kiele beispielsweise aus Gewebe, vorzusehen, die dann entsprechend linienförmig angreifen und den verformbaren Bereich in die zweite Stellung bewegen. Selbstverständlich ist es möglich, auch mehr als eine Betätigungseinrichtung pro verformbaren Bereich vorzusehen, so z. B. zwei Kiele oder eine entsprechende Zahl von Waageseilen.

Eine bevorzugte spezielle Ausführungsform des erfindungsgemäßen Fahrzeuges sieht vor, daß das Fahrzeug als Lenkdrachen ausgebildet ist, wobei dieser Drachen vorzugsweise nur eine flexible und stablose Tragfläche besitzt und somit ein Parafoil-Drachen ist. Hierbei befinden sich an dieser Tragfläche im vorderen Bereich derselben eine Reihe, beispielsweise zwischen etwa 5 und etwa 20, verformbare Bereiche, während die Betätigungseinrichtung eine der Zahl der verformbaren Bereiche entsprechende Anzahl von Waageseilen aufweist. Diese Waageseile sind in bezug auf die Tragflächenlängsrichtung in zwei symmetrischen Scharen angeordnet, wobei jede Schar der Waageseile mit einer Steuerleine verbunden ist, so daß der Benutzer diesen Drachen über diese beide Steuerleinen steuert. Bei einer Zugbeanspruchung einer der beiden Steuerleinen wird die entsprechende Schar der Waageseile ebenfalls auf Zug beansprucht und die andere Seite entlastet, wodurch die hiermit verbundenen verformbaren Bereiche aus der ersten Stellung in die zweite Stellung überführt werden, so daß sich an dem entsprechenden Tragflächenabschnitt der Luftwiderstand vergrößert. Dies wiederum bewirkt, daß sich die Flugrichtung des Parafoil-Drachens zu der Seite hin ändert, an der sich die verformbaren Bereiche in der zweiten Stellung befinden.

Ein besonders gutes und präzises Steuern sowie ein hervorragendes Auftriebsverhalten der zuvor beschriebenen Ausführungsform des erfindungsgemäßen Fahrzeuges wird dadurch ermöglicht, daß die Waageseile einer jeden Schar eine unterschiedliche Länge besitzen. Vorzugsweise verändert sich hierbei in Querrichtung der Tragfläche gesehen die Länge der Waageseile von außen nach innen im Verhältnis von 71 : 70 : 75 : 86 : 100.

Bei einer weiteren Ausführungsform des erfindungsgemäßen Fahrzeuges, bei der es sich um einen Zweileinen-Parafoils-Lenkdrachen handelt, ist an der Tragfläche eine Vielzahl von Luftkammern angeordnet, wobei jede Kammer im vorderen Bereich der Tragfläche, insbesondere der vorderen Kante der Tragfläche, mindestens eine erste Öffnung aufweist. Bei mindestens einer der Kammern der Tragfläche ist eine zweite Öffnung vorgesehen, wobei bei einer bevorzugten Weiterbildung jede Kammer diese zweite Öffnung besitzt. Hierbei bewirkt diese zweite Öffnung, daß auch bei extrem starken Windverhältnissen ein konstanter Luftdruck in den Kammern aufrechterhalten wird, so daß die Kammern ihre geometrische Form behalten und damit eine Geschwindigkeitszunahme erreicht sowie eine Beschädigung der Kammerwandungen vermieden wird. Ferner wird durch die Anordnung der zweiten Öffnung erreicht, daß der Lenkdrachen pulsationsfrei und schwingungsfrei fliegen kann. Auch erleichtert die zweite Öffnung an jeder Kammer, daß die Kammer besonders leicht und unproblematisch von Verschmutzungen, wie beispielsweise Wasser, Sand, Staub o. dgl., gereinigt werden kann. Darüber hinaus ermöglicht die zweite Öffnung an jeder Kammer, daß die Tragfläche bei einem plötzlichen Aufprall, beispielsweise auf den Boden, entlüftet wird, so daß die in der Kammer befindliche komprimierte Luft durch die zweite Öffnung entweichen kann und hierdurch ein Zerstören der Kammer verhindert wird.

Als besonders vorteilhaft konnte festgestellt werden, wenn die zweite Öffnung an der hinteren Kante der Tragfläche angeordnet ist.

Eine besonders geeignete Ausführungsform des erfindungsgemäßen Fahrzeuges sieht vor, daß sich die zweite Öffnung erst bei einem bestimmten Luftdruck in der Kammer öffnet. Dies kann beispielsweise dadurch erreicht werden, daß man eine zweite Öffnung vorsieht, deren Rand mit einem elastischen Element, beispielsweise einem federelastischen Draht, versehen ist. Hierbei wölbt sich die Kammer abhängig von dem darin herrschenden Innendruck unterschiedlich auf, wodurch das elastische Element durch unterschiedliche Kräfte beaufschlagt wird, was wiederum zu einem unterschiedlichen Öffnungsgrad der zweiten Öffnung führt. Eine weitere Ausführungsform einer sich abhängig von dem in der Kammer herrschenden Innendruck öffnenden zweiten Öffnung wird nachfolgend noch bei den Ausführungsbeispielen beschrieben.

Vorteilhafte Weiterbildungen des erfindungsgemäßen Fahrzeuges sind in den Unteransprüchen wiedergegeben.

Das erfindungsgemäße Fahrzeug wird nachfolgend anhand von verschiedenen Ausführungsformen in Verbindung mit der Zeichnung näher erläutert. Hierbei zeigen:

Figur 1 eine perspektivische Ansicht eines als Parafoil-Drachen ausgebildeten Fahrzeuges;

Figur 2 eine schematische Draufsicht auf den Parafoil-Drachen gemäß Figur 1 mit entfernter oberer Tragflächenabdeckung;

Figur 3 eine schematische Draufsicht auf die obere Tragflächenabdeckung; und

Figuren 4 - 9 eine Schnittansicht von vier Ausführungsformen einer Tragfläche.

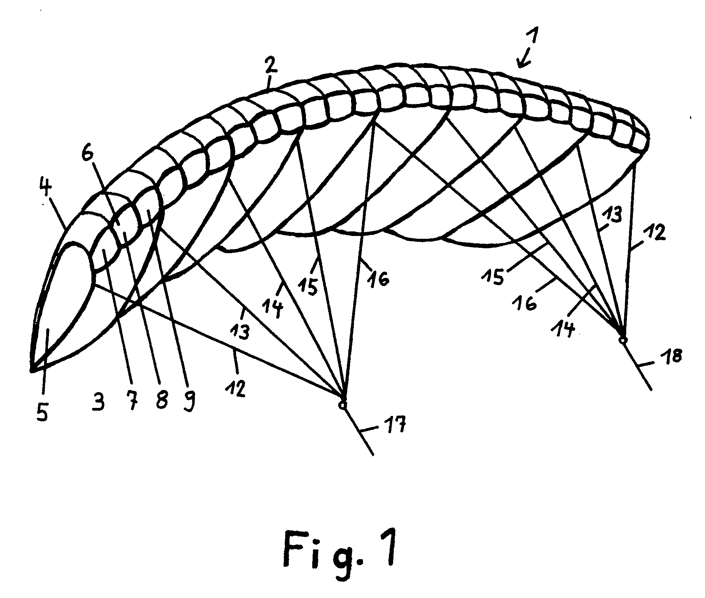

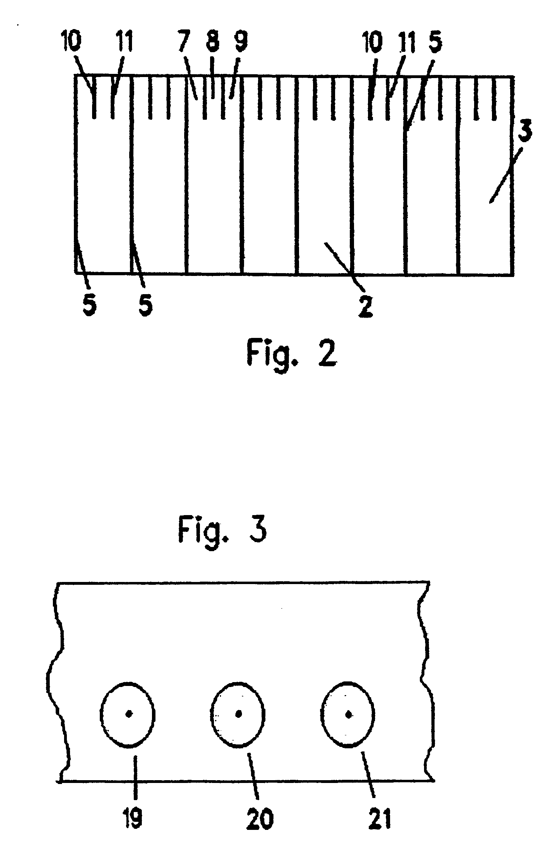

In Figur 1 ist ein insgesamt mit 1 bezeichnetes Luftfahrzeug dargestellt, bei dem es sich um einen Parafoil-Drachen handelt. Hierbei besitzt das Luftfahrzeug eine einzige Tragfläche 2, die eine flexible Konstruktion umfaßt, wobei diese Konstuktion völlig frei von Verstärkungsstreben ist. Vielmehr wird die für den Flugbetrieb notwendige Versteifung der Tragfläche 2 dadurch erreicht, daß die untere Tragflächenabdeckung 3 und die obere Tragflächenabdeckung 4 unter Ausbildung von acht Kammern miteinander verbunden sind, wobei sich hierfür eine entsprechende Anzahl von Wandungen 5 zwischen der oberen Tragflächenabdeckung 4 und der unteren Tragflächenabdeckung 3 erstrecken. Diese Kammern sind durch den Staudruck mit Luft gefüllt. Diese Luft hat einen höheren Luftdruck als der Außenluftdruck und gibt der Tragfläche die reale Form. Die Kammern besitzen im Bereich der vorderen Kante der Tragfläche 2 Lufteintrittsöffnungen 6. Jede einzelne Luftkammer ist weiterhin durch zusätzliche Zwischenwandungen im Bereich der Eintrittsöffnung 6 derart unterteilt, daß die in der Figur 1 gezeigte Ausführungsform pro Luftkammer drei Eintrittsöffnungen 7, 8 und 9 besitzt. Um diese Unterteilung zu erreichen, sind zusätzliche Wandungen 10 und 11 vorgesehen, die sich jedoch nicht über die gesamte Tiefe der Tragfläche 2 erstrecken, wie dies insbesondere in der Figur 2 erkennbar ist.

Zur Steuerung des Parafoil-Drachens sind auf jeder Seite der Tragfläche 2 jeweils fünf Waageseile 12 bis 16 vorgesehen, die jeweils zu einer Schar zusammengefaßt sind. An jeder Schar der Waageseile ist ein Steuerseil 17 bzw. 18 angeordnet. Hierbei sind vorzugsweise innerhalb jeder Schar von Waageseilen die Längen der Seile 12 : 13 : 14 : 15 : 16 im Verhältnis 71 : 70 : 75 : 86 : 100 angeordnet.

Im oberen Bereich verzweigt sich jedes Waageseil V-förmig, wobei die Verzweigungen durch die untere Tragflächenabdeckung 5 geführt sind und mit ihren Enden an der oberen Tragflächenabdeckung 4 an den verformbaren Bereichen 19 bis 21 (Figur 3) angreifen.

Zur Steuerung des Luftfahrzeuges 1 wird je nach der gewünschten Richtungsänderung eine der beiden Steuerleinen 17 bzw. 18 auf Zug beansprucht. Diese Zugkraft setzt sich über die entsprechende Schar der Waageseile 12 bis 16 bis zu den entsprechenden verformbaren Bereichen 19 bis 21 fort, so daß die verformbaren Bereiche flächig oder linienförmig verformt werden, wie dies am besten in Figur 3 erkennbar ist. Durch diese Überführung der verformbaren Bereiche 19 bis 21 in die zweite Stellung ändert sich der Luftwiderstand der jeweiligen Tragflächenhälfte, so daß das Luftfahrzeug in die entsprechende Richtung im Uhrzeigersinn gedreht wird und die gewünschte Richtungsänderung herbeigeführt wird. Bei einer Entlastung der Zugbeanspruchung kehren die verformbaren Bereiche in ihre Ausgangsstellung (erste Stellung) zurück, so daß der Luftwiderstand entsprechend wieder verringert wird und damit beide Tragflächenhälften den gleichen Luftwiderstand besitzen. Dies führt dazu, daß das Luftfahrzeug entsprechend geradeaus fliegt.

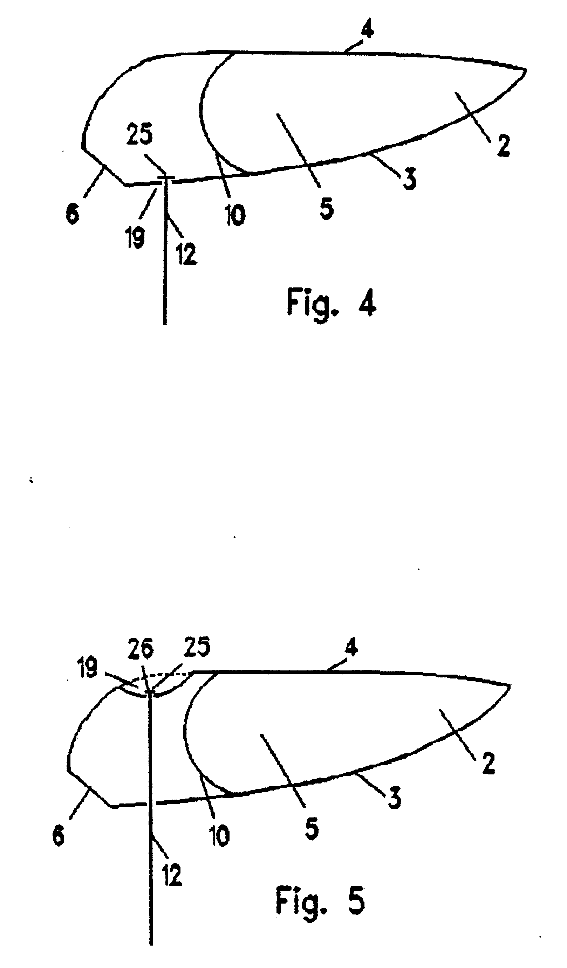

In den Figuren 4 bis 7 sind verschiedene Ausführungsformen einer Tragfläche 2 in einer Schnittansicht abgebildet. Hierbei besitzt jeder der gezeigten Ausführungsformen eine untere Tragflächenabdeckung 3, eine obere Tragflächenabdeckung 4, eine Wandung 5, eine Lufteintrittsöffnung 6, eine zusätzliche Wandung 10 sowie ein Waageseil 12, das an dem verformbaren Bereich 19 bzw. 19a und 19b angreift. Die gezeigten Ausführungsformen unterscheiden sich lediglich darin, daß dieser Angriff des Waageseiles 12 unterschiedlich ausgestaltet ist und daß der verformbare Bereich 2 entweder an der oberen oder an der unteren Tragflächenabdeckung angeordnet ist.

Bei der in Figur 4 gezeigten Ausführungsform befindet sich der verformbare Bereich 19 an der unteren Tragflächenabdeckung 3. Um die zuvor beschriebene Bewegung des verformbaren Bereiches zwischen der ersten und der zweiten Stellung zu erreichen, ist das Waageseil 12 durch die untere Tragflächenabdeckung 3 geführt und besitzt an seinem Ende ein Sperrelement 25, das beispielsweise im einfachsten Fall aus eine Scheibenelement besteht.

Bei der in Figur 5 gezeigten Ausführungsform, das den verformbaren Bereich 19 in seiner zweiten Stellung abbildet, ist das Waageseil 12 durch die untere Tragflächenabdeckung 3 sowie durch die obere Abdeckung 4 geführt und besitzt ebenfalls das zuvor beschriebene Sperrelement 25. Bei einer Entlastung des Waageseiles 12 bewegt sich der verformbare Bereich in Pfleilrichtung 26, d. h. in Richtung auf die erste Stellung, so daß bei einer völligen Entlastung des Waageseiles der verformbare Bereich eine Position einnimmt, wie dies in Figur 5 durch die gestrichelte Linie angedeutet ist.

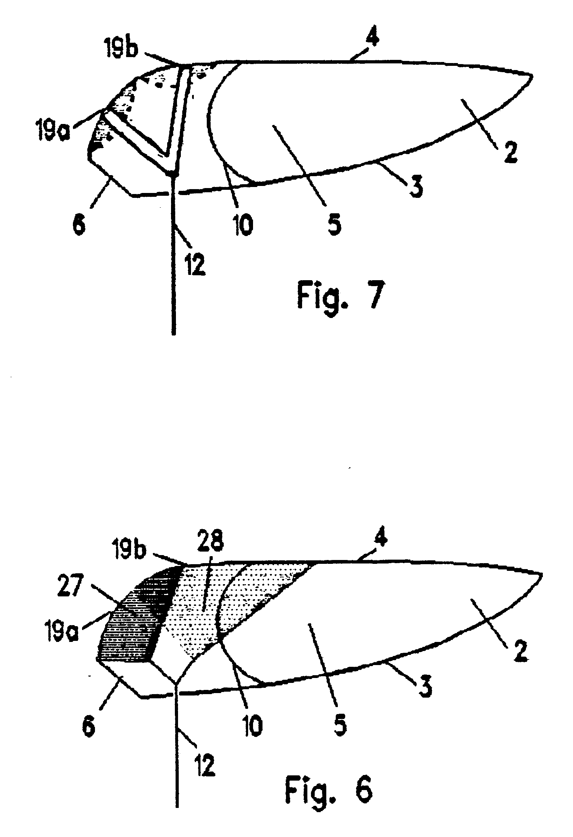

Bei der in Figur 6 gezeigten Ausführungsform ist das Waageseil 12 ebenfalls durch die untere Tragflächenabdeckung 3 geführt und verzweigt sich innerhalb der Luftkammer V-förmig. Am Ende dieser V-förmigen Verzweigungen sind zwei Kiele 27 und 28 vorgesehen, die jeweils an einem verformbaren Bereich 19a und 19b der oberen Tragflächenabdeckung 4 angreifen. Hierbei entstehen somit bei einer Zugbeanspruchung des Waageseiles 12 in der oberen Tragflächenabdeckung zwei Vertiefungen (zweite Stellung des verformbaren Bereiches), so daß der Luftwiderstand entsprechend weiter vergrößert wird.

Auch die in der Figur 7 dargestellte Ausführungsform weist zwei verformbare Bereiche 19a und 19b auf, die jeweils der oberen Tragflächenabdeckung 4 der Tragfläche 2 zugeordnet sind. Hierbei ist das Waageseil 12 durch die untere Tragflächenabdeckung 3 geführt und, wie bei allen zuvor beschriebenen Ausführungsformen, frei in bezug auf die untere Tragflächenabdeckung 3 bewegbar. Bei einer Zugbeanspruchung des Waageseiles 12 wird die Kraft über einen V-förmigen Gewebestreifen auf die beiden verformbaren Bereiche 19a und 19b übertragen, so daß diese beiden verformbaren Bereiche in die zweite Stellung, die durch die gestrichelten Linien angedeutet ist, überführt werden, so daß der Luftwiderstand an der oberen Tragflächenabdeckung 4 entsprechend vergrößert wird.

Wie bei den zuvor beschriebenen und den Figuren 4 bis 7 gezeigten Ausführungsformen deutlich zu erkennen ist, ist die zusätzliche Wandung 10 an ihrer Abschlußkante konkav gekrümmt, wodurch bei hohen Belastungen verhindert wird, daß diese Kante aus ihrer Befestigung mit der oberen und unteren Tragflächenabdeckung ausgerissen wird. Die zusätzliche Wandung 11 ist genau wie die zusätzliche Wandung 10 ausgebildet.

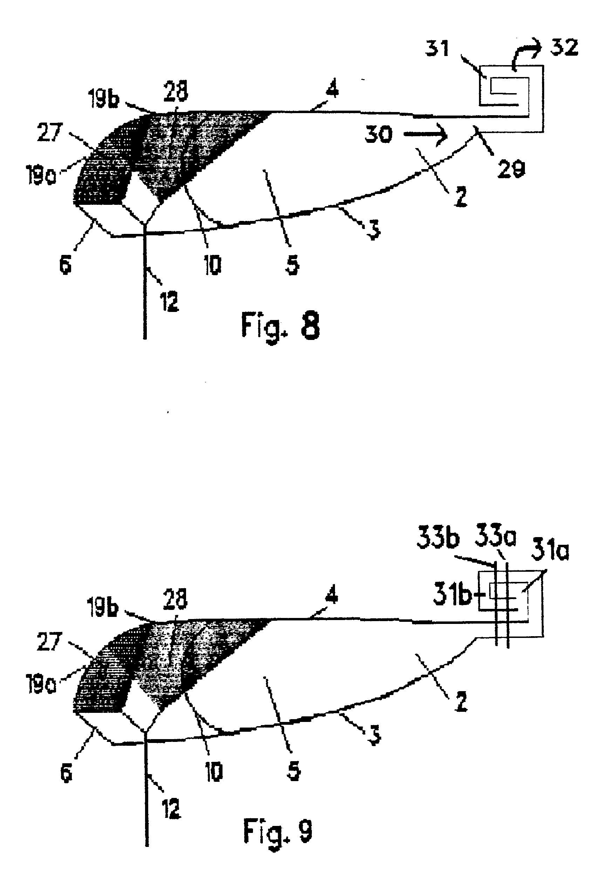

Die in den Figuren 8 und 9 dargestellte weitere Ausführungsform der Tragfläche 2 weist, wie die zuvor beschriebenen Tragflächen, eine obere Tragflächenabdeckung und eine untere Tragflächenabdeckung 3 auf. Hierbei erstreckt sich zwischen der oberen Tragflächenabdeckung 4 und der unten Tragflächenabdeckung 3 die Wandung 5, so daß die Tragfläche 2 eine Vielzahl von durch die Wandungen 5 unterteilte Luftkammern aufweist, wie dies im Prinzip schon für die in Figur 1 gezeigte Ausführungsform beschrieben wurde. Im Bereich der vorderen Kante der Tragfläche 2 ist für jede Kammer mindestens eine erste Lufteintrittsöffnung 6 vorgesehen, wobei diese Lufteintrittsöffnung durch nicht gezeigte Zwischenwandungen in drei Lufteintrittsöffnungen unterteilt wird, wie dies bereits vorstehend beschrieben wurde. An der hinteren Kante besitzt die Tragfläche 2 eine trichterförmig verlaufende und abgewinkelte zweite Öffnung 29, durch die die in die Lufteintrittsöffnung 6 einströmende Luft aus der Kammer wieder ausströmen kann, wie dies durch den Pfeil 30 angedeutet ist. Mit zunehmendem Druck in der Kammer bewegt sich der Abschnitt 31 der trichterförmigen Öffnung 29 in Pfeilrichtung 32, wodurch der Luftdurchsatz pro Zeiteinheit durch die Öffnung 29 vergrößert wird. Hierdurch wird erreicht, daß stets ein konstanter Luftinnendruck in der Kammer herrscht. Mit abnehmendem Luftinnendruck wird der Abschnitt 31 entgegengesetzter Pfeilrichtung 32 in die in Figur 8 gezeigte Form zurückbewegt. Diese Rückstellung des Abschnittes 31 der trichterförmigen Öffnung 29 wird dadurch erreicht, daß benachbarte Kantenabschnitte so genäht sind, wie dies in Figur 9 gezeigt ist. Hierbei werden die hinteren Abschnitte 31a und 31b der oberen bzw. unteren Tragflächenabdeckung doppelt gefaltet und in Form einer Kappnaht mit einer doppelten Naht versehen, wie dies durch die Striche 33a und 33b im vergrößerten und auseinandergezogenen Maßstab angedeutet ist.

## Ansprüche

1. Fahrzeug, insbesondere Luft- oder Wasserfahrzeug, mit mindestens einer Tragfläche, die eine obere und/oder untere Tragflächenabdeckung sowie einen an der Tragfläche vorgesehenen Bereich umfaßt, der zwischen einer ersten Stellung, in der der Luft- bzw. Wasserwiderstand der Tragfläche gering ist, und einer zweiten Stellung, in der der Luft- bzw. Wasserwiderstand vergrößert ist, bewegbar ist, und eine an dem Bereich angreifenden Betätigungseinrichtung zur Durchführung der Bewegung, dadurch gekennzeichnet, daß der Bereich als verformbarer Bereich (19a, 19b, 19 - 21) ausgebildet ist und einen Abschnitt der oberen und/oder unteren Tragflächenabdeckung (3, 4) bildet.

2. Fahrzeug nach Anspruch 1, dadurch gekennzeichnet, daß die Tragfläche (2) eine Vielzahl von verformbaren Bereichen (19a, 19b, 19 - 21) aufweist.

3. Fahrzeug nach Anspruch 1 oder 2, dadurch gekennzeichnet, daß nur die obere Tragflächenabdeckung (4) mit dem verformbaren Bereich (19a, 19b, 19 - 21) versehen ist.

4. Fahrzeug nach einem der vorangehenden Ansprüche, dadurch gekennzeichnet, daß der verformbare Bereich (19a, 19b, 19 - 21) in einem vorderen Abschnitt der Tragflächenabdeckung (3, 4) angeordnet ist.

5. Fahrzeug nach einem der vorangehenden Ansprüche, dadurch gekennzeichnet, daß sich der verformbare Bereich (19a, 19b, 19 - 21) über 10 % bis 80 %, vorzugsweise über 20 bis 40 %, der Fläche der Tragflächenabdeckung erstreckt.

6. Fahrzeug nach einem der vorangehenden Ansprüche, dadurch gekennzeichnet, daß die Tragfläche als Tragfläche für ein Luftfahrzeug (1) ausgebildet ist und einseitig offene Luftkammern aufweist, wobei die Öffnungen (6 - 9) der Luftkammern im vorderen Bereich, insbesondere an der vorderen Kante,der Tragfläche (2) angeordnet sind.

7. Fahrzeug nach Anspruch 6, dadurch gekennzeichnet, daß die Luftkammern im Bereich ihrer Öffnungen (6 - 9) durch zusätzliche Wandungen (10, 11), die sich nur teilweise über die Tiefe der Luftkammern erstrecken, unter Ausbildung von weiteren Kammern unterteilt sind.

8. Fahrzeug nach Anspruch 7, dadurch gekennzeichnet, daß sich die zusätzlichen Wandungen (10, 11) über 10 % bis 40 %, vorzugsweise über 20 % bis 30 %, der Tiefe der Luftkammern erstrek-ken.

9. Fahrzeug nach Anspruch 7 oder 8, dadurch gekennzeichnet, daß die zusätzlichen Wandungen (10, 11) bogenförmig gekrümmte, vorzugsweise konkave, Abschlußkanten besitzen.

10. Fahrzeug nach einem der vorangehenden Ansprüche, dadurch gekennzeichnet, daß die Betätigungseinrichtung innerhalb der Tragfläche (2) angeordnet ist.

11. Fahrzeug nach einem der vorangehenden Ansprüche, dadurch gekennzeichnet, daß die Betätigungseinrichtung durch eine Zugbeanspruchung den verformbaren Bereich (19a, 19b, 19 - 21) bewegt.

12. Fahrzeug nach einem der vorangehenden Ansprüche, dadurch gekennzeichnet, daß die Betätigungseinrichtung punktuell und/oder linienförmig an dem verformbaren Bereich (19a, 19b, 19 - 21) angreift.

13. Fahrzeug nach einem der vorangehenden Ansprüche, dadurch gekennzeichnet, daß es als Drachen mit einer Tragfläche (2) ausgebildet ist, wobei an der Tragfläche (2) im vorderen Bereich derselben eine Reihe von verformbaren Bereichen (19a, 19b, 19 - 21) vorgesehen sind, und daß die Betätigungseinrichtung eine der Anzahl der verformbaren Bereiche (19a, 19b, 19 - 21) entsprechende Anzahl von Waageseilen (12 - 16) aufweist, die in mindestens zwei symmetrischen Scharen angeordnet sind, wobei jede Schar mit einer Steuerleine (17, 18) verbunden ist.

14. Fahrzeug nach Anspruch 13, dadurch gekennzeichnet, daß die Waageseile (12 - 16) einer jeden Schar eine unterschiedliche Länge besitzen.

15. Fahrzeug nach Anspruch 14, dadurch gekennzeichnet, daß jede Schar der Waageseile (12 - 16) zwischen 2 und 100, vorzugsweise zwischen 5 und 10 Waageseile (12 - 16),umfaßt.

16. Fahrzeug nach Anspruch 15, dadurch gekennzeichnet, daß die Waageseile (12 - 16) einer jeden Schar von der äußeren Tragflächenkante zur Tragflächemitte unterschiedlich lang sind, wobei die Längen der Waageseile von der Kante zur Mitte nicht linear ab- oder zunimmt.

17. Fahrzeug nach Anspruch 16, dadurch gekennzeichnet, daß jede Schar fünf Waageseile (12 - 16) aufweist, deren Längen von der äußeren Tragflächenkante zum Mittelpunkt der Tragfläche gesehen in einem Verhältnis von 71 : 70 : 75 : 86 : 100 stehen.

18. Fahrzeug nach Anspruch 17, dadurch gekennzeichnet, daß jeweils das innenliegende Waageseil (16) einer jeden Schar an dem selben verformbaren Bereich angreift.

19. Fahrzeug nach einem der Ansprüche 13 bis 18, dadurch gekennzeichnet, daß an der Tragfläche (2) eine Vielzahl von Luftkammern angeordnet ist, daß jede Luftkammer im vorderen Bereich der Tragfläche (2), insbesondere an der vorderen Kante der Tragfläche, mindestens eine erste Öffnung (7, 8) aufweist und daß bei mindestens einer Kammer der Tragfläche eine zweite Öffnung (29) vorgesehen ist.

20. Fahrzeug nach Anspruch 19, dadurch gekennzeichnet, daß jede Kammer die zweite Öffnung (29) aufweist.

21. Fahrzeug nach Anspruch 19 oder 20, dadurch gekennzeichnet, daß die zweite Öffnung (29) im hinteren Bereich der Tragfläche (2), insbesondere an der hinteren Kante der Tragfläche, vorgesehen ist.

22. Fahrzeug nach einem der Ansprüche 19 bis 21, dadurch gekennzeichnet, daß sich die zweite Öffnung (29) erst bei einem bestimmten Luftdruck in der Kammer öffnet.

# Fig. 1

Fig. 2

Fig. 3

19    20    21

Fig. 4

Fig. 5

Fig. 7

Fig. 6

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 709 515 (BAUER) <br> * Spalte 2, Zeile 56 - Spalte 3, Zeile 36 * <br> – – – | 1,2,4-6, 10-15 | B 64 D 17/02 <br> B 63 B 41/00 |
| X | FR-A-2 558 791 (LACHOVIEZ) <br> * Seite 4, Zeilen 27-35; Seite 5, Zeilen 29-32 * <br> – – – | 1-6 | |
| A | FR-A-1 396 654 (CAPITAL PARACHUTING ENTREPRISES) <br> * Seite 3, rechte Spalte, Zeilen 3-20 * <br> – – – | 1 | |
| A | US-A-4 175 722 (HIGGINS) <br> * Spalte 2, Zeilen 11-40 * <br> – – – | 1 | |
| A | DE-A-3 804 892 (BAUER) <br> * Spalte 2, Zeile 41 - Spalte 3, Zeile 44 * <br> – – – | 1 | |
| A | DE-A-3 707 463 (DOLEZALEC) <br> * Spalte 4, Zeile 50 - Spalte 5, Zeile 24 * <br> – – – | 7-9 | |
| A | GB-A-1 086 126 (JALBERT) <br> * Seite 2, Zeilen 9-31 * <br> – – – – – | 19-22 | |

| | RECHERCHIERTE SACHGEBIETE (Int. Cl.5) |
|---|---|
| | B 64 D <br> B 63 B <br> A 63 H |

Der vorliegende Recherchenbericht wurde für alle Patentansprüche erstellt

| Recherchenort | Abschlußdatum der Recherche | Prüfer |
|---|---|---|
| Den Haag | 28 Januar 91 | HAUGLUSTAINE H.P.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument